# EUROPEAN PATENT SPECIFICATION

(11) **EP 3 275 326 B1**
(45) Date of publication and mention of the grant of the patent: **16.09.2026**
(21) Application number: 16768823.3
(22) Date of filing: 23.03.2016
(51) Int. Cl.: A41D 13/06, A41D 31/00, A41D 31/02, B32B 27/08, B32B 25/08, B32B 27/12, B32B 3/02

(54) **FABRIC FOR SUPPORT**
GEWEBE FUER UNTERSTUETZUNG
ÉTOFFE POUR SUPPORT

(30) Priority: 26.03.2015 JP 2015063712
(43) Date of publication of application: 31.01.2018
(73) Proprietor: Nippon Sigmax Co., Ltd., Tokyo 163-6033 (JP)
(72) Inventor: IKARASHI, Kyohei, Tokyo 163-6033 (JP)
(74) Representative: Schmid, Nils T.F.
(86) International application number: PCT/JP2016/059208
(87) International publication number: WO 2016/152920

(56) References cited:
- JP-A- 2010 529 311
- JP-A- 2013 002 017
- JP-B2- 5 638 954
- US-A1- 2012 174 282

## Description

### Field of the Invention

The present invention relates to a fabric for support, and more particularly to the fabric suitable for making a support that in itself has sufficient fixing strength despite being thin.

### Background of the Invention

A thin support is known in which a less stretchable area is formed by partially bonding a synthetic resin to stretchable fabric (for example, see Patent Literature 1).

However, since the synthetic resin bonded area of such a conventional support is difficult to stretch compared to the other area, there was a problem that though the conventional support somewhat compresses the corresponding part of a human body at the time of wearing, fixing strength applied to an affected area, such as a joint, is insufficient. On the other hand, since the difference in the degree of stretch between the stretchable fabric and the synthetic resin more increases if a much less stretchable synthetic resin is bonded in order to increase fixing strength, there was a problem that the synthetic resin peels from the stretchable fabric.

From US 2012/174282 A1 athletic garments with a base layer and a flexible layer consisting of two layers disposed on the front as well as on the back of the base layer are known.

From JP 2010 529311 A a fabric comprising three layers with different stretch resistances is known.

From JP 5 638954 B2 a resin-treated fabric with a resin layer which is formed partially on one or both sides of the fabric is known, wherein at least part of the resin layer consists of two or more resin layers.

From JP 2013 002017 A a piece of clothing is known, that is formed of stretchable fabric coated with a liquid adhesive. Citation List

### Patent Literature

Patent Literature 1: JP 2005-125541 A

### Summary of the Invention

### Technical Problem

The present invention, which has been made in view of the foregoing problems, is directed to a fabric for support that in itself has sufficient fixing strength despite being thin and prevents the peeling of a synthetic resin part.

### Solution to Problem

As a result of extensive research aimed at solving the above-mentioned problems, the inventor of the present invention found that a very good result can be achieved by forming on a top surface of a stretchable substrate a first synthetic resin film layer that is less stretchable than the stretchable substrate and by forming and coating on the first synthetic resin film layer a second synthetic resin film layer that is less stretchable than the first synthetic resin film layer, and thus the inventor has completed the present invention.

That is, the present invention solves the above-mentioned problem by a fabric for support, in which, at least, a first synthetic resin film layer that is less stretchable than a stretchable substrate is formed on a top surface of the stretchable substrate within the stretchable substrate, and a second synthetic resin film layer that is less stretchable than the first synthetic resin film layer is formed on a top surface of the first synthetic resin film layer within the first synthetic resin film layer.

### Effect of the Invention

The fabric for support of the present invention, in which synthetic resin film layers are sequentially laminated on the stretchable substrate, has sufficient fixing strength in itself and does not necessarily need a fixing strap or the like.

Additionally, the difference in the degree of stretch between the stretchable substrate and the first synthetic resin film layer and the difference in the degree of stretch between the first synthetic resin film layer and the second synthetic resin film layer do not increase remarkably, so that the first synthetic resin film layer and/or the second synthetic resin film layer are prevented from peeling.

### Brief Description of Drawings

Fig. 1 is a cross-sectional view of fabric for support according to the present invention.
Fig. 2 is a plan view of the fabric for support according to the present invention.
Fig. 3 is a cross-sectional view illustrating another embodiment of the fabric for support according to the present invention.
Fig. 4 is a plan view of an ankle support made by using the fabric for support according to the present invention.
Fig. 5 is a perspective view illustrating an example of wearing the ankle support of Fig. 4.

### Detailed Description of the Invention

Embodiments of the present invention are described below with reference to the drawings.

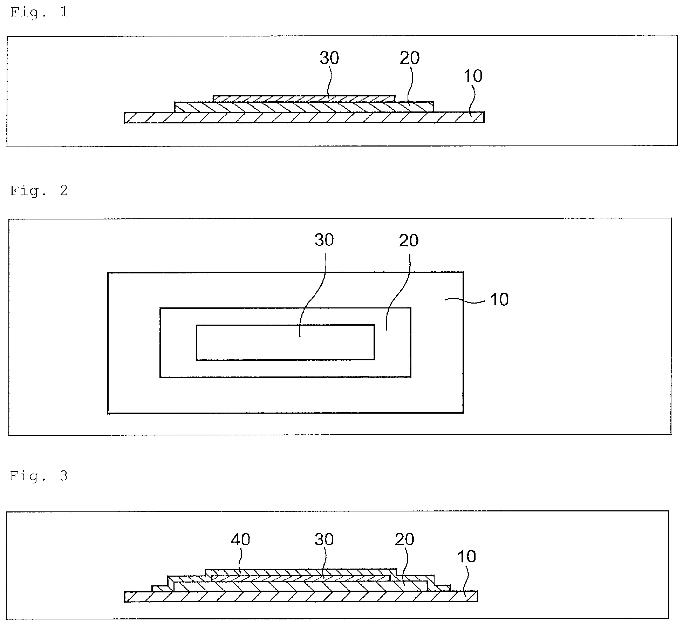

In Figs. 1 and 2, reference numeral 10 designates a stretchable substrate, reference numeral 20 designates a first synthetic resin film layer, and reference numeral 30 designates a second synthetic resin film layer.

The stretchable substrate 10 is not particularly limited as long as it has a stretch and, for example, a commonly used thin (about 0.3 to 2 mm thick) fabric for support is preferably used.

The first synthetic resin film layer 20 is less stretchable than the stretchable substrate 10, that is, the first synthetic resin film layer 20 has a low stretch ratio, and the first synthetic resin film layer 20 is formed on a top surface of the stretchable substrate 10 within the stretchable substrate 10.

The second synthetic resin film layer 30 is less stretchable than the first synthetic resin film layer 20, that is, the second synthetic resin film layer 30 has a low stretch ratio, and the second synthetic resin film layer 30 is formed on a top surface of the first synthetic resin film layer 20 within the first synthetic resin film layer 20.

The method of forming the first synthetic resin film layer 20 and the second synthetic resin film layer 30 is not particularly limited and, for example, a method of pressing and forming the synthetic resin film layers through an adhesive applied thereto or a method of pressing and forming by applying heat at a temperature above the melting point of the synthetic resins of the synthetic resin film layers 20, 30 is preferable. In particular, pressing and forming by applying heat at a temperature above the melting point in the latter method causes part of the upper synthetic resins to be impregnated into the lower stretchable substrate 10 or to be melted and integrated with the lower first synthetic resin film layer 20, which advantageously prevents peeling of the first synthetic resin film layer 20 and/or the second synthetic resin film layer 30 in a more reliable manner.

A number of other synthetic resin film layers (not shown), if appropriate, may be laminated on a top surface of the second synthetic resin film layer 30. In this case, the above other synthetic resin film layers are less stretchable than the synthetic resin film layer thereunder and are formed within the synthetic resin film layer. This is desirable to obtain a support that has fixing strength and prevents peeling.

As described above, a number of other synthetic resin film layers 40 may be laminated on a top surface of the uppermost one of the laminated synthetic resin film layers beyond any synthetic resin film layers thereunder (i.e., the second synthetic resin film layer 30 and the first synthetic resin film layer 20 of Fig. 3) and within the stretchable substrate 10, as illustrated in Fig. 3. In this case, while the synthetic resin film layer 40 may be more stretchable than any lower synthetic resin film layers (i.e., the second synthetic resin film layer 30 and the first synthetic resin film layer 20 illustrated in Fig. 3) and the stretchable substrate 10, the synthetic resin film layer 40 may be formed of a film layer that is more stretchable than any lower synthetic resin film layers (i.e., the second synthetic resin film layer 30 and the first synthetic resin film layer 20 illustrated in Fig. 3) and is less stretchable than the stretchable substrate 10. This is desirable to obtain a support that maintains fixing strength and prevents peeling.

Materials of the synthetic resin films for the first synthetic resin film layer 20, the second synthetic resin film layer 30, and other synthetic resin film layers are not particularly limited and, for example, thermoplastic rubbery synthetic resins are preferably used, which are preferably about 0.05 to 0.5 mm thick.

The stretch ratio of the stretchable substrate 10 is 10, the following stretch ratios of the first synthetic resin film layer 20 and the second synthetic resin film layer 30 are desirable in maintaining fixing strength and preventing peeling, where the stretch ratio of two-layer part comprised of the stretchable substrate 10 and the first synthetic resin film layer 20 is 2 to 3, and the stretch ratio of three-layer part comprised of the stretchable substrate 10, the first synthetic resin film layer 20 and the second synthetic resin film layer 30 is 1 (herein a tensile tester for determining the stretch ratio is, for example, "STROGRAPH VES5D" manufactured by Toyo Seiki Co., Ltd.).

As described above, the fabric for support according to the present invention includes at least the first synthetic resin film layer 20 that is less stretchable than the stretchable substrate 10 and more stretchable than the second synthetic resin film layer 30 and that is interposed between the most stretchable substrate 10 and the least stretchable second synthetic resin film layer 30, so that the difference in the degree of stretch between the stretchable substrate 10 and the first synthetic resin film layer 20 is less than the difference in the degree of stretch when the least stretchable second synthetic resin film layer 30 is directly laminated on the top surface of the stretchable substrate 10, thus preventing the first synthetic resin film layer 20 from peeling from the stretchable substrate 10. Similarly, the difference in the degree of stretch between the first synthetic resin film layer 20 and the second synthetic resin film layer 30 is less than the difference in the degree of stretch between the stretchable substrate 10 and the second synthetic resin film layer 30, thus preventing the second synthetic resin film layer 30 from peeling from the first synthetic resin film layer 20.

Accordingly, when the outer shape of the fabric for support according to the present invention is formed in accordance with a bodypart on which the fabric for support is worn, and detachable hook-and-loop fastener is provided at some ends thereof, a support can be obtained that has sufficient fixing strength despite being thin and prevents the peeling of the synthetic resin film layers.

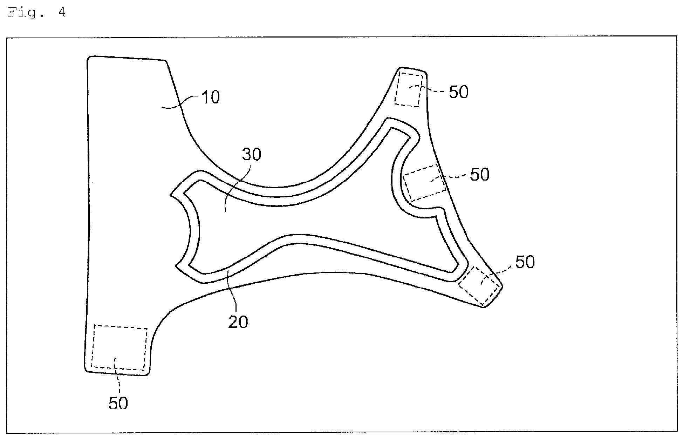

Fig. 4 illustrates an exemplary ankle support made by using the fabric for support according to the present invention. The fabric for support is configured such that peripheral of the fabric for support (i.e., stretchable substrate 10) are formed into a generally concave curved shape in order to avoid "sagging" when wound and attached on the ankle, and detachable hook-and-loop fastener 50 is provided at the end.

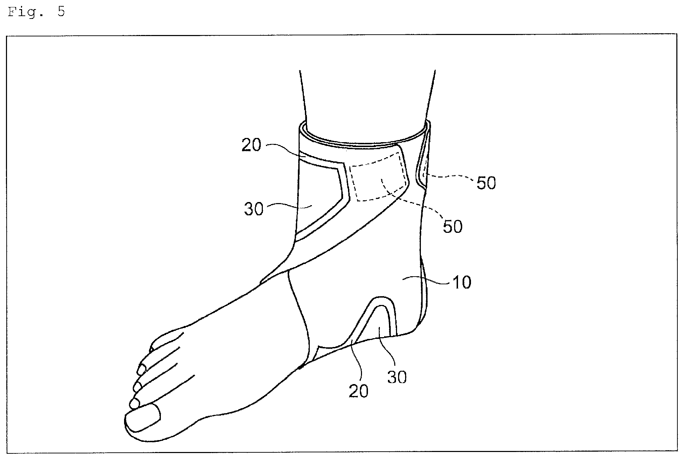

Wearing this ankle support on the ankle as illustrated in Fig. 5 enables an ankle to be securely held using only the support and without using a strap or the like.

### Reference Signs List

- 10:: stretchable substrate
- 20:: first synthetic resin film layer
- 30:: second synthetic resin film layer
- 40:: other synthetic resin film layer(s)
- 50:: hook fastener

## Claims

1. A fabric for support comprising
a stretchable substrate (10);
a first synthetic resin film layer (20); and
a second synthetic resin film layer (30),
wherein, at least, the first synthetic resin film layer (20) that is less stretchable than the stretchable substrate (10) is formed on a top surface of the stretchable substrate (10) within the stretchable substrate (10), and the second synthetic resin film layer (30) that is less stretchable than the first synthetic resin film layer (20) is formed on a top surface of the first synthetic resin film layer (20) within the first synthetic resin film layer (20) and
wherein a stretch ratio of the stretchable substrate is 10, a stretch ratio of a two-layer part comprised of the stretchable substrate (10) and the first synthetic resin film layer (20) is 2 to 3, and a stretch ratio of a three-layer part comprised of the stretchable substrate (10), the first synthetic resin film layer (20) and the second synthetic resin film layer (30) is 1.

2. The fabric for support according to claim 1,
wherein the first synthetic resin film layer (20) and the second synthetic resin film layer (30) are formed by pressing a synthetic resin film.

3. The fabric for support according to claim 2,
wherein the first synthetic resin film layer (20) and the second synthetic resin film layer (30) are pressed and formed through an adhesive.

4. The fabric for support according to claim 2,
wherein the first synthetic resin film layer (20) and the second synthetic resin film layer (30) are pressed and formed by applying heat at a temperature above melting points of synthetic resins of the first synthetic resin film layer (20) and the second synthetic resin film layer (30).

5. The fabric for support according to claim 4,
wherein part of the synthetic resin of the second synthetic resin film layer (30) is impregnated into the stretchable substrate (10) by pressing.

6. The fabric for support according to any one of claims 1 to 5, further comprising a number of other synthetic resin film layers,
Wherein the other synthetic resin film layers are laminated on a top surface of an uppermost synthetic resin film layer of the fabric for support without any synthetic resin film layers thereunder and within the stretchable substrate (10).

## Patentansprüche

1. Stützgewebe umfassend:
ein dehnbares Substrat (10);
eine erste Kunstharzfilmschicht (20); und
eine zweite Kunstharzfilmschicht (30),
wobei zumindest die erste Kunstharzfilmschicht (20), die weniger dehnbar als das dehnbare Substrat (10) ist, auf einer Oberseite des dehnbaren Substrats (10) innerhalb des dehnbaren Substrats (10) ausgebildet ist, und die zweite Kunstharzfilmschicht (30), die weniger dehnbar als die erste Kunstharzfilmschicht (20) ist, auf einer Oberseite der ersten Kunstharzfilmschicht (20) innerhalb der ersten Kunstharzfilmschicht (20) ausgebildet ist, und
wobei ein Dehnungsverhältnis des dehnbaren Substrats 10 beträgt, ein Dehnungsverhältnis eines Zweischichtteils, das aus dem dehnbaren Substrat (10) und der ersten Kunstharzfilmschicht (20) besteht, 2 bis 3 beträgt, und ein Dehnungsverhältnis eines Dreischichtteils, das aus dem dehnbaren Substrat (10), der ersten Kunstharzfilmschicht (20) und der zweiten Kunstharzfilmschicht (30) besteht, 1 beträgt.

2. Stützgewebe nach Anspruch 1,
wobei die erste Kunstharzfilmschicht (20) und die zweite Kunstharzfilmschicht (30) durch Pressen einer Kunstharzfolie ausgebildet sind.

3. Stützgewebe nach Anspruch 2,
wobei die erste Kunstharzfilmschicht (20) und die zweite Kunstharzfilmschicht (30) mittels eines Klebstoffs gepresst und ausgebildet sind.

4. Stützgewebe nach Anspruch 2,
wobei die erste Kunstharzfilmschicht (20) und die zweite Kunstharzfilmschicht (30) durch Anwenden von Wärme bei einer Temperatur oberhalb der Schmelzpunkte der Kunstharze der ersten Kunstharzfilmschicht (20) und der zweiten Kunstharzfilmschicht (30) gepresst und ausgebildet sind.

5. Stützgewebe nach Anspruch 4,
wobei ein Teil des Kunstharzes der zweiten Kunstharzfilmschicht (30) durch das Pressen in das dehnbare Substrat (10) imprägniert ist.

6. Stützgewebe nach einem der Ansprüche 1 bis 5, ferner umfassend:
eine Mehrzahl weiterer Kunstharzfilmschichten,
wobei die weiteren Kunstharzfilmschichten auf einer Oberseite einer obersten Kunstharzfilmschicht des Gewebes zum Stützen ohne darunter liegende Kunstharzfilmschichten und innerhalb des dehnbaren Substrats (10) laminiert sind.

## Revendications

1. Tissu de support comprenant
un substrat étirable (10) ;
une première couche de film de résine synthétique (20) ; et
une seconde couche de film de résine synthétique (30),
dans lequel, au moins, la première couche de film de résine synthétique (20) qui est moins étirable que le substrat étirable (10) est formée sur une surface supérieure du substrat étirable (10) dans le substrat étirable (10), et la seconde couche de film de résine synthétique (30) qui est moins étirable que la première couche de film de résine synthétique (20) est formée sur une surface supérieure de la première couche de film de résine synthétique (20) dans la première couche de film de résine synthétique (20) et
dans lequel le rapport d'étirage du substrat étirable est de 10, le rapport d'étirage d'une partie à deux couches constituée du substrat étirable (10) et de la première couche de film de résine synthétique (20) est de 2 à 3, et le rapport d'étirage d'une partie à trois couches constituée du substrat étirable (10), de la première couche de film de résine synthétique (20) et de la seconde couche de film de résine synthétique (30) est de 1.

2. Tissu de support selon la revendication 1,
dans lequel la première couche de film de résine synthétique (20) et la seconde couche de film de résine synthétique (30) sont formées par compression d'un film de résine synthétique.

3. Tissu de support selon la revendication 2,
dans lequel la première couche de film de résine synthétique (20) et la seconde couche de film de résine synthétique (30) sont pressées et formées à travers un adhésif.

4. Tissu de support selon la revendication 2,
dans lequel la première couche de film de résine synthétique (20) et la seconde couche de film de résine synthétique (30) sont pressées et formées par application de chaleur à une température supérieure aux points de fusion des résines synthétiques de la première couche de film de résine synthétique (20) et de la seconde couche de film de résine synthétique (30).

5. Tissu de support selon la revendication 4,
dans lequel une partie de la résine synthétique de la seconde couche de film de résine synthétique (30) est imprégnée dans le substrat étirable (10) par compression.

6. Tissu pour support selon l'une quelconque des revendications 1 à 5, comprenant en outre un certain nombre d'autres couches de film de résine synthétique,
les autres couches de film de résine synthétique étant stratifiées sur une surface supérieure d'une couche de film de résine synthétique située le plus en haut du tissu de support sans aucune couche de film de résine synthétique sous celle-ci et à l'intérieur du substrat étirable (10).
